# EUROPEAN PATENT APPLICATION

(11) **EP 2 947 292 A1**
(43) Date of publication of application: **25.11.2015**
(21) Application number: 14169461.2
(22) Date of filing: 22.05.2014
(51) Int. Cl.: F01N 3/20, B60K 13/04

(54) **System for improving liquid homogeneity in a vehicular liquid storage tank**

(71) Applicant: Inergy Automotive Systems Research (Société Anonyme), 1120 Bruxelles (BE)
(72) Inventor: Butler, Josh, Bloomfield Hills, MI 48302 (US); Herdier, Romain, 1180 Uccle (BE); Hill, David, Commerce Township, MI Michigan 48382 (US); McCleary, Scott, White Lake, MI Michigan 48386 (US)
(74) Representative: Remy, Vincent Noel Paul

(57) **Abstract**

The invention concerns a vehicular liquid storage system, the system comprising a tank and a liquid dispensing pump (2) having an inlet (1) and a bypass circuit outlet (4) arranged within said tank; the inlet (1) and the bypass circuit outlet (4) are arranged in such a way that, if a vertical liquid density gradient is present, liquid having a first density is taken in by the inlet and moved through the bypass circuit outlet (4) to a portion of the tank containing liquid having a second density, with the second density being lower than the first density.

## Description

### Field of the Invention

The present invention pertains to the field of vehicular liquid containment systems, in particular urea storage systems, and in particular to mitigating the effects of freezing and thawing of the liquid.

### Background

In the field of urea storage and delivery systems, it is the state of the art to store and dose urea of a known concentration into the exhaust stream. The urea solution normally consists of a ∼32.5wt% concentration of urea in water. This concentration level matches the eutectic point on a phase diagram of urea/water mixtures, and thus minimizes the temperature at which the solution freezes (which is to be avoided).

Solutions having concentrations other than the eutectic concentration tend to create a slurry phase in a certain temperature range above the eutectic freezing temperature, the actual range being dependent on the variation of concentration relative to the 32.5wt% mark. The result is that when the solution is subjected to temperatures associated with these ranges, there is a separation of a portion of the water and the urea.

Since urea is denser than water, it sinks to the bottom, resulting in a higher urea concentration at the bottom of the tank than the top. This phenomenon is especially prevalent at the time of freezing, as even a small deviation from the 32.5wt% point can cause these slurries to form. The natural sloshing occurring through use of the vehicle will counteract the separation of water and urea to a certain extent, but it is not able to avoid the effect completely. Throughout this application, reference is made to density gradients and concentration gradients. The skilled person will appreciate that these terms are used in a broad, interchangeable way, because solutions having a higher urea concentration will also be denser.

In modern urea-based SCR systems, it is customary to measure the concentration of the urea in the tank in order to inform the vehicle whether it has proper fluid, and more specifically how much fluid volume should be dosed, given the urea concentration of the fluid. The known methodologies for measuring the concentration of the fluid all measure the concentration at the bottom of the tank. Such a measurement is unreliable and thus not useful if a gradient is present in the tank, as the sensor is likely reading a concentration that is not indicative of the average concentration within the bulk fluid.

Initially this is not an issue, as the pickup for the delivery module (typically a mounted flange with the pump and optionally a swirl pot) is at the bottom of the tank as well. Hence, the concentration measurement is accurate relative to the fluid that is being dosed into the exhaust stream. However, the bulk fluid concentration will change over time. At a certain moment, the fluid concentration can become unsuitable for dosing.

In addition, it is often difficult to thaw a suitable amount of urea for a drive cycle, depending on the duration of the drive cycle and the amount of urea required during operation. Generally speaking, the heating is concentrated toward the module area of the storage system. Hence, only conductive heat transfer is available towards the rest of the tank, which may be insufficient to heat the bulk fluid.

A known attempt to overcome these problems is based on the existing urea delivery modules on the market. The urea delivery module has a bypass orifice included that bypasses fluid in order to extend the life of the pump. This solution aims to drive the pump to discharge liquid out of this bypass orifice in order to circulate some liquid within the tank (forced convection). However, the distance covered by such a liquid flow is not sufficient to create any measurable amount of fluid homogenization, and as a result does not eliminate the gradient that can be built up in the tank.

### Summary of the Invention

It is the aim of embodiments of the present invention to at least partially overcome the shortcomings of the systems mentioned above.

According to an aspect of the present invention, there is provided a vehicular liquid storage system, the system comprising a tank and a liquid dispensing pump having an inlet and a bypass circuit outlet arranged within the tank; wherein the inlet and the bypass circuit outlet are arranged in such a way that, if a vertical liquid density gradient is present, liquid having a first density is taken in by the inlet and moved through the bypass circuit outlet to a portion of the tank containing liquid having a second density, the second density being lower than the first density.

The liquid storage system according to the present invention is preferable a urea solution storage system, although the principles of the invention could also be applied to other stored liquids that may build up density or concentration gradients under certain conditions.

The invention is based on the insight that the flow of liquid discharged by the bypass circuit outlet can be used to stir and homogenize the liquid in the tank, provided that the geometry of the inlet and the bypass circuit outlet are judiciously chosen so as to actually move high-concentration liquid to a low-concentration zone. That goal is not met by the prior art systems.

In an embodiment of the vehicular liquid storage system according to the present invention, the bypass circuit outlet is equipped with a venturi element, the venturi element being arranged to take in liquid having a third density, the third density being between the first and the second density.

It is an advantage of this embodiment that the mixing of different concentrations is enhanced, because the venturi element, which has an additional inlet at an intermediate elevation (representing an intermediate concentration level), will cause additional movement of the liquid.

In an embodiment of the vehicular liquid storage system according to the present invention, the bypass circuit outlet is equipped with a venturi element, the venturi element being arranged to take in gas from the vapor dome within the tank, and to discharge the gas along with the liquid having the first density.

It is an advantage of this embodiment that the mixing of different concentrations is enhanced, because the venturi element, which has an additional inlet at the vapor dome, will introduce gas bubbles in the forced liquid flow. These bubbles will rise and drag the high concentration liquid along.

In an embodiment of the vehicular liquid storage system according to the present invention, the bypass circuit outlet is equipped with a tube extending to a top portion of the tank.

By top portion is meant, preferably, a portion above the maximum fill level of the tank (i.e., in the vapor dome), or sufficiently close to that level. This embodiment maximizes the mixing of different concentrations, by discharging the high-concentration liquid at the point where the pre-existing concentration is lowest.

In an embodiment of the vehicular liquid storage system according to the present invention, the bypass circuit outlet is equipped with a motor driven liquid propelling element.

In this embodiment, the kinetic energy of the forced liquid flow is further increased, to enhance the mixing.

In an embodiment of the vehicular liquid storage system according to the present invention, the bypass circuit outlet is equipped with a check valve.

The check valve ensures the proper operation of the bypass circuit, and ensures one-way flow of the forced liquid flow used for mixing purposes.

According to an aspect of the present invention, there is provided a vehicular liquid storage system, the system comprising a tank and a liquid dispensing pump having an inlet and a bypass circuit outlet arranged within the tank; wherein the bypass circuit outlet is arranged in such a way as to discharge liquid at a level in the tank which is elevated relative to the inlet.

This aspect is based on the insight that concentration is correlated with liquid density, and that different elevation levels in the tank thus represent different concentration levels.

According to an aspect of the present invention, there is provided a use of the system as described above to remove a density gradient in a liquid stored in the tank.

In an embodiment, the liquid is an aqueous urea solution.

In an embodiment of the use according to the present invention comprises the steps of: measuring at least one of a temperature and a set of concentrations of the liquid; assessing or estimating the homogeneity of the liquid on the basis of the at least one of a temperature and a set of concentrations of the liquid; and, if the assessed or estimated homogeneity is indicative of the presence of a density gradient, running the pump for a predetermined amount of time.

It is an advantage of this embodiment that sensors are used to make sure that the system according to the present invention is only engaged when it is useful and necessary, thus avoiding unnecessary pump wear and energy consumption.

According to an aspect of the present invention, there is provided a motor vehicle comprising the vehicular liquid storage system as described above for storing a urea solution for use in SCR treatment of exhaust gases.

Given the properties of urea solutions described above, it is particularly advantageous to apply the invention to SCR systems.

### Brief Description of the Figures

These and other technical aspects and advantages of embodiments of the present invention will now be described in more detail with reference to the accompanying drawings, in which:
- Figure 1 shows a prior art SCR system, comprising a tank, a gear pump having a pump inlet, a pump outlet, and a bypass circuit outlet equipped with a check valve;
- Figure 2 schematically illustrate a cycle of freezing and thawing of a stored aqueous urea solution, and the impact of this cycle on the local urea concentration;
- Figure 3 illustrates an embodiment of the liquid storage system according to the present invention;
- Figure 4 illustrates another embodiment of the liquid storage system according to the present invention;
- Figure 5 illustrates another embodiment of the liquid storage system according to the present invention;
- Figure 6 illustrates another embodiment of the liquid storage system according to the present invention; and

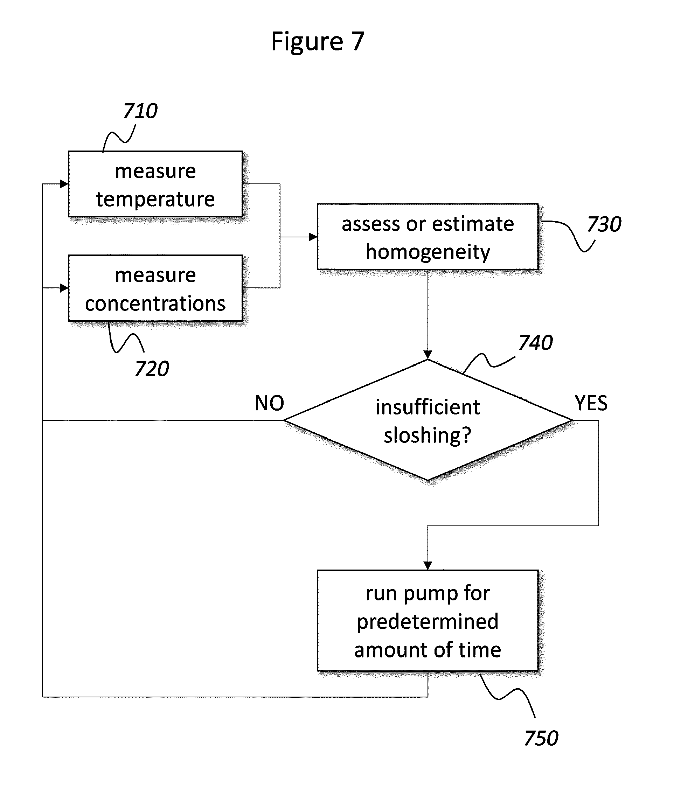

- Figure 7 schematically represents an embodiment of the use of the system according to the present invention.

### Description of Embodiments

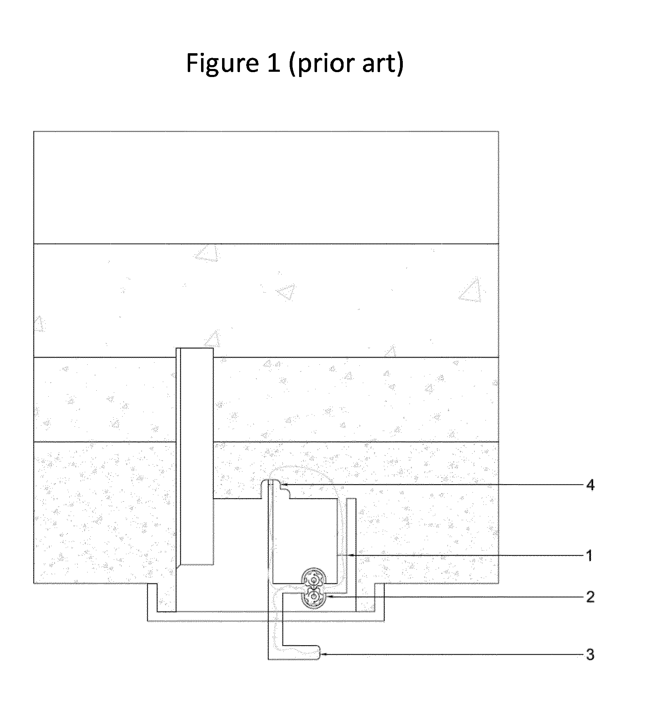

As can be seen in Figure 1, in the presence of a concentration gradient, the prior art module only circulates heavy concentration fluid and will therefore not be effective in removing the gradient. The illustrated SCR system comprises a tank, gear pump **2** with a pump inlet **1,** a pump outlet **3,** and a bypass circuit outlet **4.**

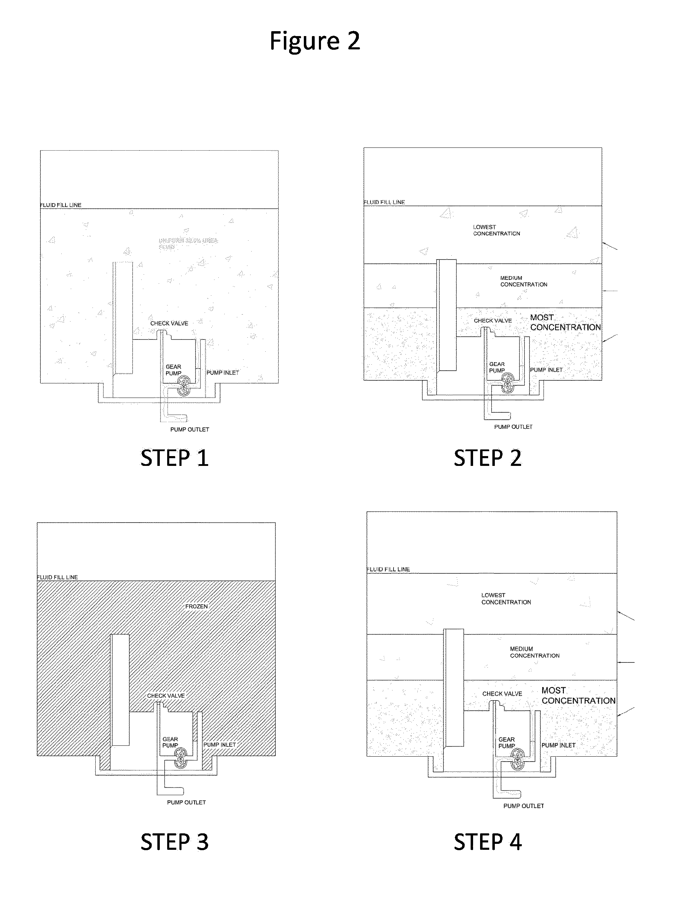

Figure 2 schematically illustrates a cycle of freezing and thawing of a stored aqueous urea solution, and the impact of this cycle on the local urea concentration. The illustrated SCR system comprises a tank, gear pump with a pump inlet, a pump outlet, and a bypass circuit outlet with a check valve.
- In step 1, the urea fluid in the tank has a homogeneous concentration.
- As shown in step 2, as the uniform fluid cools down to a certain temperature, the fluid separates and presents a gradient, where the denser liquid portion (the portion with a higher urea concentration) settles to the bottom, leaving lower concentration liquid resting at the top.
- In step 3, the liquid is frozen, and the concentration gradient remains.
- In step 4, the liquid has thawed again, and the gradient problem still remains after thawing.

Several embodiments of the present invention will now be described. In all the described embodiments, the inherent bypass loop is exploited in order to increase the distance of fluid flow from this bypass valve. The advantages of these solutions include the following:
- The existing fluid flow from the bypass orifice, which is normally waste energy, is put to use;
- No additional moving parts are required, nor control algorithms to drive any actuators;
- The components added to the system are relatively cheap, enabling improved performance at a marginal cost increase.

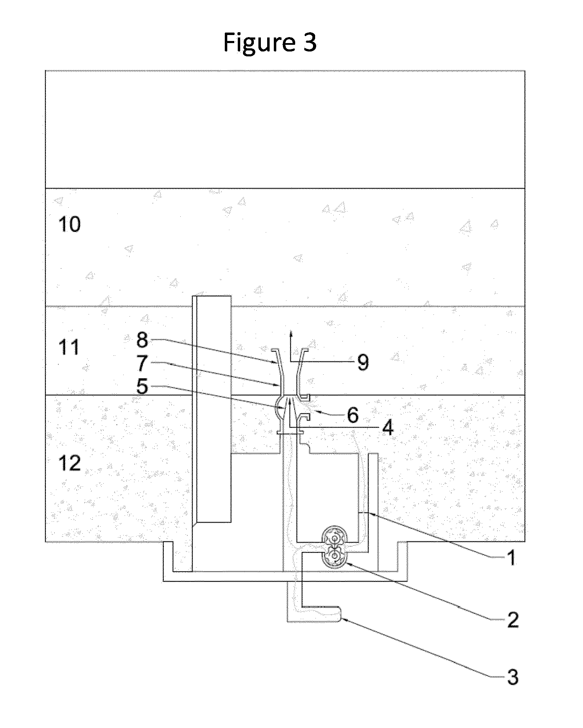

In Figure 3, a urea storage system comprises a urea storage tank, a urea delivery module comprising a pump **2** a level sensor and specifically a fluid bypass orifice or bypass circuit outlet **4.** Fluid from the bypass orifice **4** is routed through a venturi **5-9** in order to transfer the high pressure coming from the fluid bypass orifice **4** into high flow. The venturi **5-9** is preferably designed to route the fluid from the bypass orifice **4** to the top of the tank.

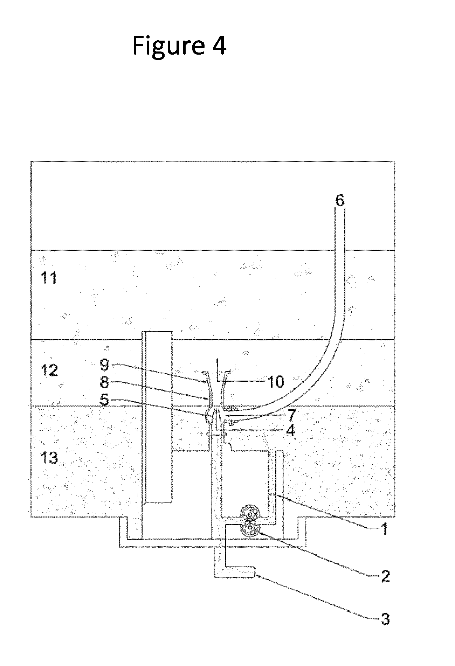

The venturi element acts as a jet pump, which may replace the check valve normally present at the bypass circuit outlet. The jet pump consists of a nozzle **5,** throat **7,** and diffuser **8.** The jet pump would use an inlet flow **4** and pressure forced through a nozzle **5** to create a vacuum. The vacuum would then suck fluid from around the jet pump **6** or from another location (see below, Figure 4) in the tank and infuse the two flows **4, 6** creating a new flow **9** and pressure. This would ultimately help stir and mix fluid with a gradient in a tank.

Figure 4 describes a urea storage system that comprises a urea storage tank, a urea delivery module comprising a pump **2** a level sensor, a fluid bypass orifice **4,** a venturi **5-9,** and a tube that connects the inlet of the venturi **6.** When the pump **2** is activated, the bypass flow causes negative pressure to pull air into the inlet of the venturi **6** and disperse said air into the storage tank. Naturally, the air will rise to the surface of the fluid causing diffusion between the gradient layers **11-13.**

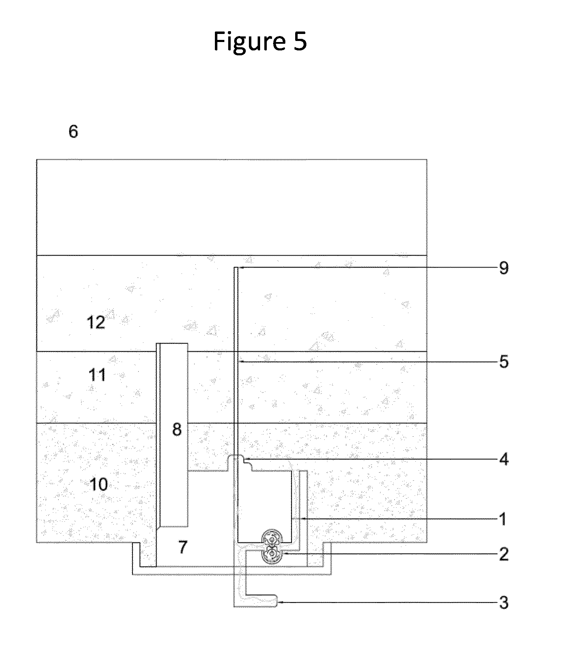

Figure 5 describes a urea storage system that comprises a urea storage tank **6,** a urea delivery module comprising a pump **2** a level sensor, a fluid bypass orifice **4,** and a sufficiently long tube **5** with an opening **9,** which is connected to the bypass orifice **4** and extends generally to the top and or an extremity of fluid storage tank **6.** Ideally this tube is used to route the high concentration fluid from the bottom of the fluid storage system to the top of the tank where the concentration **11** is relatively low. The result is a mixing of the fluid as the displaced denser fluid **13** descends through the less dense fluid **11, 12.**

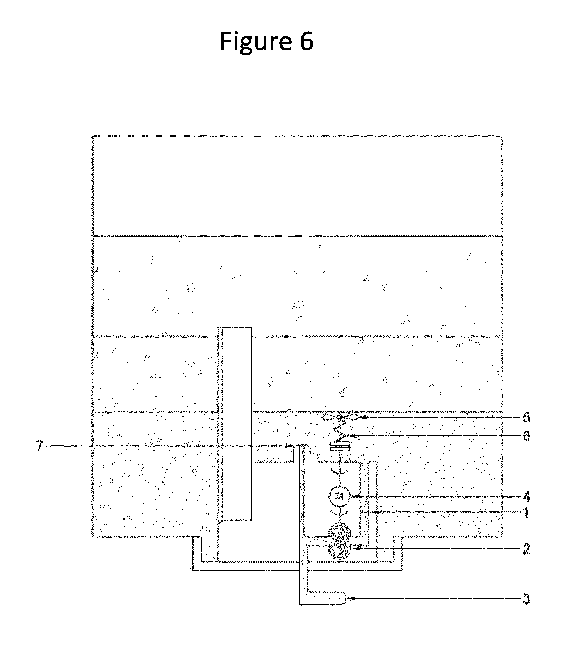

Figure 6 illustrates an embodiment of the invention using a liquid propelling device. The system comprises an electric motor **4,** gear pump **2,** shaft, clutch **6,** and propelling device **5** arranged at or near the bypass circuit outlet **7.** The electric motor **4** drives the gear pump **2** and the propelling device **5.** The propelling device **5** stirs the fluid in the tank. Lastly, the clutch **6** allows for the pump **2** to spin if the propelling device **5** is frozen stuck.

The systems described above are intended to be used to remove a density gradient (or a concentration gradient) in a liquid stored in the tank, in particular where the liquid is an aqueous urea solution. An embodiment of this use is schematically represented by the flow chart of Figure 8. In this embodiment, the use of the system comprises the steps of measuring at least one of a temperature **710** and a set of concentrations **720** (at different positions in the tank) of the liquid; assessing or estimating the homogeneity of the liquid **730** on the basis of the measured properties of the liquid; and, if **740** the assessed or estimated homogeneity is indicative of the presence of a density gradient (i.e., when it is determined that insufficient sloshing has occurred to keep the liquid sufficiently homogenous), running the pump **750** for a predetermined amount of time. The predetermined time may be a function of (measured) ambient conditions and the tank geometry.

While the invention has been described hereinabove with reference to specific embodiments, this was done to clarify and not to limit the invention. The skilled person will appreciate that various modifications and different combinations of disclosed features are possible without departing from the scope of the invention.

### Clauses

Various exemplary aspects of the present invention are summarily defined by the following clauses.
1. A liquid urea storage system comprising a storage tank, a fluid delivery pump, a pump module to contain said fluid delivery pump, an a fluid bypass orifice optimized to improve fluid transfer between said module and the extremities of said storage tank.
2. A system according to clause 1 wherein the means of improving the fluid transfer comprises a tube that routes the flow of the fluid bypass to the top of the tank, and or the top of the fluid level in the tank.
3. A system according to clause 1 wherein the means of improving the fluid transfer comprises a venturi to convert high pressure output from the fluid bypass orifice into high fluid flow.
4. A system according to any of the preceding clauses in which the said optimized flow is used to promote mixing of the fluid in the tank in order to homogenize the urea concentration within said fluid.
5. A system according to any of the preceding clauses in which the said optimized flow is used to promote convective heat transfer into the fluid in order to increase the thawing rate of said fluid.
6. A method of homogenizing the fluid concentration comprising the following steps:
   - Determining the temperature conditions appropriate to drive the pump
   - Measuring the concentration of the fluid
   - Determining that there is insufficient sloshing within the fuel tank to promote homogenization
   - Running the pump for a predetermined period of time
   - Measuring the fluid concentration after said predetermined period of time.
7. A method of homogenizing the fluid concentration of a urea storage system comprising the following steps:
   - Determining the temperature conditions within the tank are conducive to a variation of urea concentration within the tank.
   - Running the pump for a predetermined period of time.
   - Measuring the fluid concentration characteristic after said predetermined time.

## Claims

1. A vehicular liquid storage system, the system comprising a tank and a liquid dispensing pump having an inlet and a bypass circuit outlet arranged within said tank;
wherein said inlet and said bypass circuit outlet are arranged in such a way that, if a vertical liquid density gradient is present, liquid having a first density is taken in by said inlet and moved through said bypass circuit outlet to a portion of the tank containing liquid having a second density, said second density being lower than said first density.

2. The vehicular liquid storage system according to claim 1, wherein the bypass circuit outlet is equipped with a venturi element, said venturi element being arranged to take in liquid having a third density, said third density being between said first and said second density.

3. The vehicular liquid storage system according to claim 1, wherein the bypass circuit outlet is equipped with a venturi element, said venturi element being arranged to take in gas from the vapor dome within said tank, and to discharge said gas along with said liquid having said first density.

4. The vehicular liquid storage system according to claim 1, wherein the bypass circuit outlet is equipped with a tube extending to a top portion of said tank.

5. The vehicular liquid storage system according to any of the preceding claims, wherein the bypass circuit outlet is equipped with a motor driven liquid propelling element.

6. The vehicular liquid storage system according to any of the preceding claims, wherein the bypass circuit outlet is equipped with a check valve.

7. A vehicular liquid storage system, the system comprising a tank and a liquid dispensing pump having an inlet and a bypass circuit outlet arranged within said tank; wherein said bypass circuit outlet is arranged in such a way as to discharge liquid at a level in said tank which is elevated relative to said inlet.

8. Use of the system according to any of the preceding claims to remove a density gradient in a liquid stored in said tank.

9. The use according to claim 8, wherein said liquid is an aqueous urea solution.

10. The use according to claim 8 or claim 9, comprising the steps of:
- measuring at least one of a temperature and a set of concentrations of said liquid;
- assessing or estimating the homogeneity of said liquid on the basis of said at least one of a temperature and a set of concentrations of said liquid;
- if said assessed or estimated homogeneity is indicative of the presence of a density gradient, running said pump for a predetermined amount of time.

11. A motor vehicle comprising the vehicular liquid storage system according to any of claims 1-7 for storing a urea solution for use in SCR treatment of exhaust gases.
